**Europäisches Patentamt**

**European Patent Office**

**Office européen des brevets**

(19)

(11) Veröffentlichungsnummer: **0 071 071 B2**

(12)

# NEUE EUROPÄISCHE PATENTSCHRIFT

(45) Veröffentlichungstag der neue Patentschrift:
**17.11.94**

(51) Int. Cl.⁵: **C08F 212/08**, C08F 220/12, C09D 125/14, C09D 133/04

(21) Anmeldenummer: **82106242.9**

(22) Anmeldetag: **13.07.82**

(54) **Verfahren zur Herstellung einer wässrigen Copolymerisat-Dispersion und Verwendung dieser Dispersion.**

(30) Priorität: **16.07.81 DE 3128025**

(43) Veröffentlichungstag der Anmeldung:
**09.02.83 Patentblatt 83/06**

(45) Bekanntmachung des Hinweises auf die Patenterteilung:
**01.06.88 Patentblatt 88/22**

(45) Bekanntmachung des Hinweises auf die Entsheidung über den Einspruch:
**17.11.94 Patentblatt 94/46**

(84) Benannte Vertragsstaaten:
**AT BE CH DE FR GB IT LI LU NL SE**

(56) Entgegenhaltungen:
EP-A- 0 028 469    CA-B- 755 146
DE-A- 1 519 041    DE-A- 1 644 993
DE-A- 2 407 159    DE-A- 2 556 327
DE-A- 2 841 033    DE-A- 2 926 631
FR-A- 1 514 096    FR-A- 2 334 729
US-A- 4 166 882    US-A- 4 273 695

Schaller, E.J., Journal of Paint Technology, Vol. 40, No. 525, 1968, pp. 433-438

(73) Patentinhaber: **HOECHST AKTIENGESELL-SCHAFT**
D-65926 Frankfurt (DE)

(72) Erfinder: **Mondt, Josef, Dr.**
**Altkönigstrasse 24d**
**D-6240 Königstein/Taunus (DE)**
Erfinder: **Rauterkus, Karl Josef, Dr.**
**Im Hain 2**
**D-6233 Kelkheim (Taunus) (DE)**
Erfinder: **Rinno, Helmut, Dr.**
**Goethestrasse 38**
**D-6238 Hofheim am Taunus (DE)**
Erfinder: **Wirth, Thaddäus, Dr.**
**Kemeler Weg 6**
**D-6209 Heidenrod-Wisper (DE)**

EP 0 071 071 B2

## Beschreibung

Die Erfindung bezieht sich auf ein Verfahren zur Herstellung einer wässrigen Copolymerisat-Dispersion und die Verwendung dieser Dispersion für die Herstellung von durch Wärme vernetzbaren (wärmehärtbaren) Überzügen.

Für die Herstellung von wärmehärtbaren Überzügen besitzen wässrige Copolymerisat-Dispersionen besonderes Interesse, weil sie nicht brennbar sind und physiologisch weniger bedenklich als Lösemittel enthaltende Überzugsmittel. Ausserdem entfällt die Wiedergewinnung von teurem Lösemittel. Neben den Eigenschaften, die man von allen Kunststoff-Dispersionen fordert, wie gutes Fliessverhalten und dadurch Verarbeitbarkeit, Koagulatfreiheit, Lager- und Temperaturbeständigkeit, ist bei Copolymerisat-Dispersionen, die als Bindemittel zur Herstellung von wärmehärtbaren Überzügen verwendet werden sollen, noch besonders wichtig, dass man gut pigmentierbare und gut hartende Überzugsmittel erhält, die schon bei Raumtemperatur trocknen und keine Risse oder sonstigen Filmstörungen aufweisen. Die daraus entstandenen Überzüge sollen dann durch Wärmebehandlung härtbar sein. Zu diesem Zweck enthalten die den Dispersionen zugrundeliegenden Copolymerisate reaktive Gruppen im Molekül, welche mit reaktiven Gruppen bestimmter Harze, insbesondere Aminoplast-Harze, reagieren, so dass das Bindemittel vernetzt.

Neben den Vorteilen, wie beispielsweise niedrige Viskosität bei hohem Feststoffgehalt, hohes Molekulargewicht und Abwesenheit flüchtiger Lösemittel, besitzen wässrige Copolymerisat-Dispersionen für wärmehärtbare Überzüge auch Nachteile, wie beispielsweise mangelnde Pigmentbenetzung, mangelhaftes Pigmentaufnahmevermögen sowie mangelnde Haftung auf dem Untergrund der mittels dieser Dispersion hergestellten Überzugsmittel und unzureichende Elastizität der eingebrannten Filme.

Bekannt sind Gemische von wässrigen Polyacrylat-Dispersionen mit Polyepoxiden als reaktive Partner (vgl. deutsche Auslegeschrift 1 199 420 = britische Patentschrift 848 350). Lackfilme aus diesen Gemischen verspröden bei der Bewitterung und vergilben bei Einwirkung von UV-Licht.

Bekannt sind auch in wässriger Dispersion vorliegende Copolymerisate, die vorwiegend aus $\alpha,\beta$-ungesättigten Carbonsäurenitrilen entstehen und die mit Amino- oder Phenol-Formaldehyd-Kondensationsprodukten vernetzbar sind (vgl. deutsche Auslegeschrift 1 248 194). Diese Produkte sind jedoch als Bindemittel für hochwertige Metallacke nicht geeignet, da die aus ihnen hergestellten Lackfilme hinsichtlich der Vergilbungsneigung, Flexibilität und Haftfestigkeit nicht den Ansprüchen der Praxis gerecht werden.

Es sind auch wässrige Copolymerisat-Dispersionen bekannt, deren zugrundeliegende Copolymerisate hydroxylgruppenhaltige, stickstofffreie Monomereinheiten enthalten (vgl. deutsche Offenlegungsschrift 2 252 065 = US-Patentschrift 4 132 688). Mittels dieser Dispersionen können zwar der Glanz und die Kratzfestigkeit der aus ihnen hergestellten Lackfilme verbessert werden, aber auch in diesem Fall genügt die Flexibilität der Lackfilme nicht den Ansprüchen der Praxis.

Weiterhin sind auch wässrige Copolymerisat-Dispersionen bekannt, zu deren Herstellung aromatische Monovinylmonomere mit Acryl- oder Methacrylsäureestern und Monomeren mit Hydroxyl-, Amid-, Amin-, Carboxyl- oder Epoxidgruppen copolymerisiert werden (vgl. deutsche Offenlegungsschriften 2 211 169 und 2 709 308 = US-Patentschrift 3 962 167 und 4 020 219 und britische Patentschrift 1 574 721). Diese Dispersionen lassen sich jedoch nicht nach üblichen Rezepten in hochwertige, wärmehärtbare Weisslacke überführen, da man nach dem Einbrennen blasige Lackfilme mit geringem Glanz und mangelhafter Chemikalienbeständigkeit erhält.

Aufgabe der Erfindung ist die Schaffung einer wässrigen Dispersion eines Copolymerisats, welches mit einem Aminoplastharz in der Wärme vernetzbar ist und zu besonders flexiblen und fehlerfreien Überzügen für metallische Untergründe führt.

Es wurde nun gefunden, dass bei einer bestimmten Auswahl der Monomeren und ihrer Mengenverhältnisse aus Styrol, Acryl- und/oder Methacrylsäureestern, Acryl- und/oder Methacrylsäure, Acyl- und/oder Methacrylamid, N-Methylolacrylamid und/oder N-Methylolmethacrylamid durch Polymerisation in Gegenwart eines anionischen sowie gegebenenfalls nichtionischen Emulgators und eines radikalbildenden Initiators eine wässrige Copolymerisat-Dispersion herstellbar ist, welche in Kombination mit einem Aminoplastharz wärmehärtbare Überzüge mit ausgezeichneten Eigenschaften ergibt. Diese Überzüge ergeben hochelastische, wetterbeständige, gut haftende und fehlerfreie Oberflächenbeschichtungen auf metallischen Untergründen.

Gegenstand der Erfindung ist ein Verfahren zur Herstellung einer wässrigen Dispersion von Copolymerisaten, die mit Aminoplasten in der Wärme vernetzbar sind, durch Copolymerisation von Styrol und/oder Methylmethacrylat als «hartmachende» Komponente, 2-Ethylhexylacrylat und/oder Butylacrylat und/oder Ethylacrylat als «weichmachende» Komponente, Hydroxyethyl(meth)acrylat und/oder Hydroxypropyl(meth)acrylat, Acrylsäure und/oder Methacrylsäure sowie einem Amid und/oder einem N-Methylolamid und/oder einem veretherten N-Methylolamid einer $\alpha,\beta$-ungesättigten Carbonsäure in wässriger Phase in Gegenwart eines Emulgators und eines radikalbildenden Initiators, dadurch gekennzeichnet, dass ein Gemisch aus

I. 40-60 Gew.-% Methylmethacrylat oder Styrol oder eines Gemischs dieser Monomeren,

II. 30-50 Gew.-% Ethylacrylat, Butylacrylat oder 2-Ethylhexylacrylat oder eines Gemischs dieser Monomeren,

III. 6,9-15 Gew.% Hydroxyethylacrylat, Hydroxyethylmethacrylat, Hydroxypropylacrylat oder Hydroxypropylmethacrylat oder eines Gemischs dieser Monomeren,

IV. 1-5 Gew.-% Acrylsäure oder Methacrylsäure oder eines Gemischs dieser Monomeren und

V. 0,5-5 Gew.-% eines Amids oder Methylolamids oder eines veretherten N-Methylolamids einer $\alpha,\beta$-ungesättigten Carbonsäure oder eines Gemischs solcher Monomeren copolymerisiert wird.

Gegenstand der Erfindung ist auch die Verwendung der nach diesem Verfahren erhaltenen Copolymerisat-Dispersion für die Herstellung von durch Wärme vernetzbaren Überzügen.

Als hartmachende Komponente I. wird bevorzugt Methylmethacrylat verwendet. Styrol kann auch allein verwendet werden. Mit Rücksicht auf die Witterungs-, insbesondere die UV-Stabilität, soll die Menge an Styrol zweckmässigerweise nicht über 30 Gew.-%, bezogen auf die Gesamtmenge der Monomeren, betragen.

Das erfindungsgemässe Polymerisationsverfahren wird als Emulsionspolymerisation in einem wässrigen Medium in den bekannten Apparaturen, beispielsweise in einem Rührkessel mit Heiz- und Kühlvorrichtung, durchgeführt. Die Zugabe der Monomeren kann in der Weise erfolgen, dass eine Lösung aus dem gesamten Wasser, dem Emulgator und einem Teil des Initiators vorgelegt wird und das Monomerengemisch und getrennt davon, aber parallel dazu der Rest des Initiators bei der Polymerisationstemperatur langsam zugegeben werden. Es ist jedoch auch möglich, einen Teil des Wassers und des Emulgators vorzulegen und aus dem rest des Wassers und des Emulgators und aus den Monomeren eine Voremulsion herzustellen, die in das Polymerisationsmilieu eingeführt wird, wobei der Initiator ebenfalls getrennt zugegeben wird. Die Polymerisation wird vorzugsweise in der Weise durchgeführt, dass man 30-50 Gew.-% des Wassers mit 10-50 Gew.-% des Emulgators oder gegebenenfalls Emulgatorgemisches vorlegt, und aus den Monomeren, dem restlichen Teil des Wassers und den verbleibenden Emulgatoren eine Voremulsion herstellt, die über 1-3 Stunden der erwärmten Vorlage zudosiert wird. Die Polymerisationstemperatur liegt im Bereich von 20 bis 100 °C, vorzugsweise 40 bis 90 °C.

Das Mengenverhältnis zwischen den Monomeren und dem Wasser wird so ausgewählt, dass die resultierende Copolymerisat-Dispersion einen Feststoffgehalt von 30 bis 60 Gew.-%, vorzugsweise 35 bis 50 Gew.-%, aufweist.

Als Emulgator wird vorzugsweise ein einzelner anionischer Emulgator oder ein Gemisch mehrerer anionischer Emulgatoren eingesetzt. Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4-5 Mol Ethylenoxid pro Mol umgesetzten Nonylphenols, ferner Alkyl- oder Arylsulfonat, Natriumlaurylsulfat, Natriumlaurylethoxylatsulfat und sekundäre Natriumalkansulfonate, deren Kohlenstoffkette 8-20 Kohlenstoffatome enthält. Die Menge des anionischen Emulgators beträgt 0,1-5,0 Gew.-%, vorzugsweise 0,5-3,0 Gew.-%, bezogen auf die Monomeren. Ferner kann zur Erhöhung der Stabilität der wässrigen Copolymerisat-Dispersion zusätzlich ein nichtionischer Emulgator vom Typ eines ethoxylierten Alkylphenols oder Fettalkohols, z.B. ein Additionsprodukt aus 1 Mol Nonylphenol und 4-30 Mol Ethylenoxid im Gemisch mit einem anionischen Emulgator eingesetzt werden, und zwar ebenfalls in einer Menge von 0,1-5,0, vorzugsweise 0,5-3,0 Gewichtsprozent, bezogen auf die Monomeren.

Das erfindungsgemässe Verfahren wird in Gegenwart eines radikalbildenden Initiators durchgeführt, insbesondere einer Peroxidverbindung. Der Initiator ist wasserlöslich oder monomerlöslich. Vorzugsweise wird ein wasserlöslicher Initiator verwendet.

Als Initiatoren eignen sich die üblichen anorganischen Perverbindungen, insbesondere Ammoniumperoxydisulfat oder Alkaliperoxydisulfate, z.B. Natriumperoxydisulfat und Kaliumperoxydisulfat, ferner Ammonium- oder Alkaliperoxydiphosphat und organische Peroxide, z.B. Benzoylperoxid, ferner organische Perester wie Perisopivalat, zum teil in Kombination mit Reduktionsmitteln wie Natriumdisulfit, Hydrazin, Hydroxylamin und mit katalytischen Mengen an Beschleunigern wie Eisen-, Kobalt-, Cer- und Vanadylsalzen.

Zur Regelung des Molekulargewichts werden Verbindungen eingesetzt, die bei der Polymerisation von Acrylatmonomeren als Kettenabbrecher brauchbar sind. Neben perhalogenierten Kohlenwasserstoffen kann jede Verbindung mit der allgemeinen Formel R-SH (R = Alkyl, Aryl, Aralkyl) verwendet werden. R ist vorzugsweise ein aliphatischer Kohlenwasserstoffrest mit 2-18 Kohlenstoffatomen; geeignete Regler sind z.B. Ethylmercaptan, n-Butylmercaptan, n-Octylmercaptan, Laurylmercaptan und t-Dodecylmercaptan. Der Regler wird in einer Menge von 0,01-5,0 Gew.-%, vorzugsweise von 0,5-3,0 Gew.-%, bezogen auf die Summe der Monomeren, eingesetzt. Wird für bestimmte Einsatzgebiete ein besonders hohes Molekulargewicht verlangt, wird die Emulsionspolymerisation ohne Regler durchgeführt.

Nach Beendigung des Zulaufs des Monomerengemisches wird der gesamte Ansatz noch für 1-3 Stunden bei 60-90°C, vorzugsweise bei 70-85°C, gerührt. Anschliessend wird die Dispersion mit einem tertiären Amin, beispielsweise Triethylamin, Diethanolmonomethylamin, Triethanolamin, Dimethylisopropylhydroxymethylamin, Dimethylaminoethanol, Dimethylaminopropanol oder Diethylaminoethanol, auf einen pH-Wert von 7,5-9,5 eingestellt. Besonders durch die Verwendung von Diethanolmonomethylamin, Dimethylaminoethanol und Dimethylaminopropanol erhält man eine besonders gute Pigmentbenetzung der Dispersionen und damit gute lacktechnische Eigenschaften.

Die durch das erfindungsgemässe Verfahren erhaltenen Copolymerisate haben Glasübergangstemperaturen ($T_G$) im Bereich von 0 bis +60°C, bevorzugt von +5 bis +35°C. Die minimalen Filmbildetemperaturen (MFT) korrelieren bei den vorliegenden wässrigen Copolymerisat-Dispersionen sehr gut mit den gemessenen $T_G$-Werten, die nach der Methode der Differentialthermoanalyse (DTA) an getrockneten Dispersionsfilmen gemessen werden. Das erfindungsgemässe Verfahren führt zu Copolymerisaten, die eine mittlere Teilchengrösse (Partikeldurchmesser) von 0,05 bis 0,15 $\mu$m aufweisen, bevorzugt von 0,07 bis 0,12 $\mu$m.

Die erfindungsgemäss erhaltene wässrige Copolymerisat-Dispersion ergibt im Gemisch mit einem wasserlöslichen und/oder wasserdispergierbaren Aminoplastharz wärmehärtbare Überzüge, die besonders elastische, haftfeste, korrosions- und witterungsstabile Füller, Struktur-, Deck- und Einschichtlackierungen ergeben.

Unter Aminoplastharzen versteht man hitzehärtbare Reaktionsprodukte aus Aldehyden, vorzugsweise Formaldehyd, mit polyfunktionellen Aminen, beispielsweise Harnstoff sowie Triazinen wie Melamin oder Benzoguanamin. Diese Harze sind häufig verethert, beispielsweise mit Methanol, um die Löslichkeit in Wasser zu fördern. Ein häufig verwendetes Melaminharz ist Hexamethoxymethylmelamin, das in Wasser klare Lösungen ergibt und deshalb besonders gut dosiert werden kann und zu lagerstabilen Bindemittelgemischen führt.

Ausserdem können herkömmliche alkylierte, beispielsweise butylierte, Melamin-Formaldehyd-Harze verwendet werden, vorausgesetzt, dass sie den Erfordernissen der Wasserlöslichkeit, der Verträglichkeit oder der Dispergierbarkeit in dem komplett formulierten Beschichtungssystem genügen.

Die erfindungsgemäss erhaltene wässrige Copolymerisat-Dispersion wird in der Art mit dem Aminoplastharz abgemischt, dass (bezogen auf Gesamtharzfeststoff) 5-40 Gew.-% Aminoplastharz, bevorzugt 10-30 Gew.-%, im Bindemittelgemisch enthalten sind.

Die Copolymerisat-Dispersionen können mit Aminoplastharzen zu Klarlacken oder zu pigmentierten Lacken formuliert werden. Man geht bei der Lackherstellung häufig so vor, dass man Pigmente und/oder Füllstoffe mit üblichen Lackhilfsmitteln, gegebenenfalls Härtungskatalysatoren und gegebenenfalls Neutralisationsmitteln zu einer Pigmentpaste anreibt, die dann mit dem Bindemittelsystem vermischt wird. Vielfach kann aber auch das Aminoplastharz als Anreibeharz (Pigmentbenetzungsmittel) bei der Herstellung der Pigmentpaste dienen.

Als Pigmente und/oder Füllstoffe können alle in der Lackindustrie üblichen Produkte eingesetzt werden, vorausgesetzt, sie sind unter alkalischen Bedingungen ausreichend stabil, damit das gebrauchsfertige Überzugsmittel mehrere Monate lagerfähig ist. Das Pigment kann bei der Herstellung von pigmentierten, wässrigen Dispersionsfarben üblichen Weise dem Ansatz zugesetzt werden. Bei Lackformulierungen mit wässrigen Copolymerisat-Dispersionen wird der Glanz häufig verbessert, wenn das Pigment in das Aminoplastharz eingemahlen wird und dann die wässrige Pigmentpaste in die wässrige Copolymerisat-Dispersion eingemischt wird. Ein typisches Pigment zur Herstellung von Weisslacken ist beispielsweise Titandioxid.

Es hat sich weiterhin gezeigt, dass die erfindungsgemäss hergestellten Copolymerisat-Dispersionen bereits von sich aus ein besonders ausgeprägtes Pigmentbenetzungsvermögen besitzen. So wurde vor allem festgestellt, dass diese Dispersionen mit anorganischen Weisspigmenten wie Titandioxid bis zu einem Gewichtsverhältnis Bindemittel : Pigment = 1 : 1 als schleierfreie und hochglänzende Einbrennbeschichtungen verarbeitet werden können. Bisher bekannte fremdvernetzende reaktive Copolymerisat-Dispersionen mit ähnlichem Polymeraufbau zeigen in dieser Pigmentierungshöhe entweder eine deutliche Schleierbildung, oder sie sind nur unter starken Glanzverlusten verwendbar. Die graphische Darstellung soll dies näher erläutern (vgl. Figur).

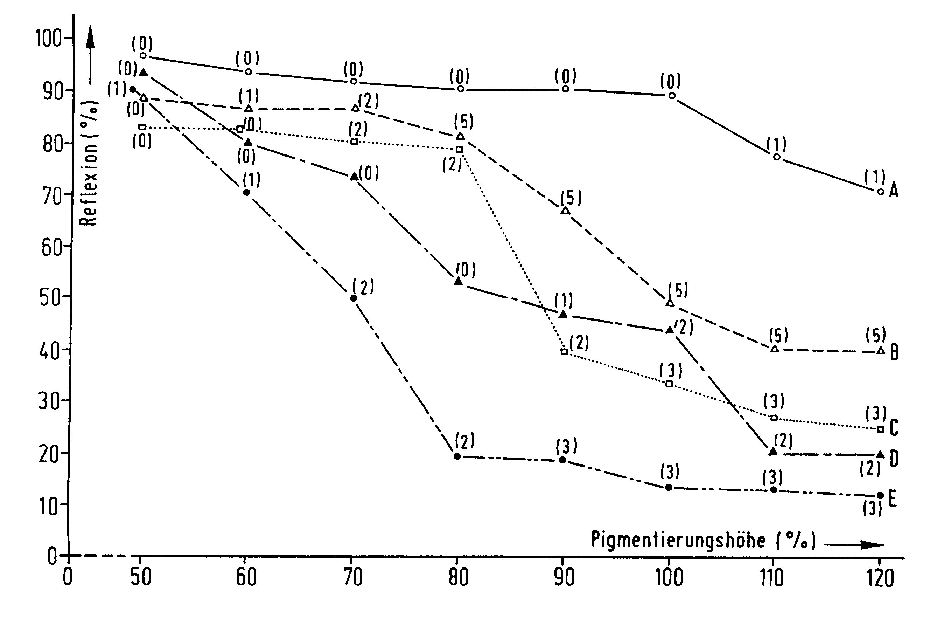

Es wurden Lacke nach Anwendungsbeispiel 1 hergestellt unter Verwendung einer erfindungsgemäss hergestellten Dispersion nach Beispiel 3 und verschiedenen Dispersionen gemäss deutscher Offenlegungsschrift 2 709 308. Die Lacke wurden auf Schleierbildung und Glanz geprüft. In der Figur ist die Reflexion (%) in Abhängigkeit von der Pigmentierungshöhe (%) aufgetragen und zu jedem Messpunkt die Beurteilung des Schleiers angegeben (Zahlen in Klammern : 0 = bestmöglicher Wert, 5 = geringstmöglicher Wert). Kurve A zeigt die Messpunkte zu dem erfindungsgemäss hergestellten Lack, während die Kurven B bis E die Messpunkte zu den nach dem Stand der Technik erhaltenen Lacken wiedergeben.

Ausser den Aminoplastharzen können als Pigmentbenetzungsmittel verschiedene Produkte eingesetzt werden; meistens kommen wasserverdünnbare oder wasserlösliche natürliche oder synthetische Polymerisate zum Einsatz, deren Wasseraffinität durch eine grössere Zahl von hydrophilen Molekülbestandteilen erreicht wird. Gemäss deutscher Offenlegungsschrift 2 505 829 werden z.B. hochsiedende Addukte mit einem Molekulargewicht von 300-6000 aus aliphatischen, mehrwertigen Alkoholen und Epoxiden eingesetzt.

Bei der Formulierung von pigmentierten Beschichtungszusammensetzungen ist es vielfach notwendig, auch sogenannte Dispergiermittel einzusetzen. Dabei ist die Wirkung des Dispergiermittels auf die Eigenschaften des fertigen Filmes zu berücksichtigen, z.B. auf die Wasserfestigkeit. Als Dispergiermittel werden z.B. die Ammoniumsalze oder Alkalisalze von polymeren Carbonsäuren eingesetzt. Die Menge der verwendeten Dispergiermittel ist abhängig von der Art und der Menge der eingesetzten Pigmente und der Bindemittel.

Das fertig formulierte Überzugsmittel kann zur Erhöhung der Lagerstabilität zusätzlich noch mit einem tertiären Amin versetzt werden. Der bevorzugte pH-Bereich liegt bei 7-9.

Zur Senkung der Einbrenntemperatur kann dem Überzugsmittel auch noch ein Härtungskatalysator zugemischt werden. Ein häufig verwendeter Katalysator ist Paratoluolsulfonsäure.

Das Überzugsmittel auf der Basis der erfindungsgemäss erhaltenen Copolymerisat-Dispersion kann auf eine Vielzahl von Untergründen aufgebracht werden, die allerdings gegen die Einbrenntemperatur stabil sein müssen. Aus diesem Grund eignen sich besonders metallische Untergründe, beispielsweise Gegenstände aus Eisen, Stahl, Aluminium, Kupfer, Bronze und Messing. Auch keramische Oberflächen, Glas und Holz können überzogen werden. Dispersionslacke können beispielsweise unter verwendung von Spritzpistolen, durch Streichen, Rakeln, Walzen oder Eintauchen auf die Untergründe aufgetragen werden. In der Praxis wird der überzogene Gegenstand vorwiegend an der Luft bei Raumtemperatur oder bei nur geringfügig erhöhter Temperatur abgelüftet und getrocknet. Dann wird der Überzug durch «Einbrennen» bei einer Temperatur von 80-180°C ausgehärtet. Die Überzüge werden in der Regel über einen Zeitraum von 10-30 Minuten eingebrannt. Die Schichtdicken der eingebrannten Überzüge liegen im Bereich von 15-80 μm, vorzugsweise 25 bis 60 μm.

Eingebrannte Klarlackfilme und pigmentierte Lackfilme auf der Basis der erfindungsgemäss hergestellten Copolymerisat-Dispersion zeichnen sich durch guten Verlauf, gute Deckkraft, Glätte, Elastizität, Glanz, Haftung, Wetterbeständigkeit und Vergilbungsresistenz aus.

Die folgenden Beispiele dienen zur näheren Erläuterung der Erfindung. Prozentangaben und Verhältnisangaben beziehen sich jeweils auf das Gewicht, die Mengenangaben bei Lösungen und Dispersionen jeweils auf den Festkörper.

Die Polymerisationsversuche werden in einem Mehrhalskolben mit Rührer, Thermometer, Tropftrichter und Temperierbad durchgeführt.

Wird als Regler ein Mercaptan verwendet, so ist darauf zu achten, dass das Mercaptan dem Monomerengemisch oder der Monomerenvoremulsion erst kurz vor Beginn des Zudosierens zugesetzt wird, weil bei längerem Stehen des mercaptanhaltigen Monomerengemischs oder der Voremulsion eine Gelb- oder Braunfärbung auftritt.

Beispiel 1

Aus

    1150 g Methylmethacrylat
    1150 g 2-Ethylhexylacrylat
    250 g Hydroxyethylmethacrylat
    30 g N-Methylolacrylamid
    20 g Methacrylamid
    50 g Methacrylsäure
    90 g Natriumlaurylsulfat
    6 g Ammoniumperoxydisulfat und
    1330 g Wasser wurde eine Monomeremulsion hergestellt. Diese Emulsion wurde zu einer Lösung von 50 g Natriumlaurylsulfat und 3 g Ammoniumperoxydisulfat in 1100 g Wasser zudosiert. Die Zulaufzeit bei +80°C betrug 2 Stunden, die Nachheizzeit bei 85°C betrug 3 Stunden. Die Copolymerisat-Dispersion wurde mit einer wässrigen Lösung von Dimethylaminoethanol (25%ig) auf pH = 8 eingestellt. Die Copolymerisat-Dispersion hatte einen Feststoffgehalt von 50%.

$T_G$ = +14°C, MFT = +11°C.

Beispiel 2

Zu einer Lösung von 30 g Natriumlaurylethoxylatsulfat mit 2-5 Mol Ethylenoxid und 3 g Ammoniumperoxydisulfat in 1100 g Wasser dosierte man eine Monomerenemulsion aus

    100 g Styrol
    1150 g Methylmethacrylat
    1060 g 2-Ethylhexylacrylat
    250 g Hydroxyethylmethacrylat
    50 g Methacrylsäure
    30 g N-Methylolacrylamid
    50 g Natriumlaurylethoxylatsulfat (2-5 Mol Ethylenoxid)

5 g Ammoniumperoxydisulfat und

1400 g Wasser.

Die Zulaufzeit und Nachheizzeit wurde nach Beispiel 1 eingestellt. Die neutralisierte Copolymerisat-Dispersion hat einen Feststoffgehalt von 50%.

$T_G$ = 12 °C, MFT = 10 °C.

Beispiel 3

Man verfuhr wie in Beispiel 1, verwendete aber folgendes Gemisch:

138 g Methylmethacrylat

138 g 2-Ethylhexylacrylat

35 g Hydroxyethylmethacrylat

7 g Methacrylsäure

4 g N-Methylolacrylamid

3 g Natriumlaurylethoxylatsulfat (2-5 Mol Ethylenoxid)

1 g Ammoniumperoxydisulfat und

157 g Wasser.

Das Gemisch wurde zu einer Lösung aus 2 g Natriumlaurylethoxylatsulfat und 0,5 g Ammoniumperoxydisulfat in 135 g Wasser zudosiert. Mit Dimethylaminoethanol wurde das Gemisch auf pH = 8,2 eingestellt. Die Copolymerisat-Dispersion hatte einen Feststoffgehalt von 50%. Der mittlere Teilchendurchmesser des Copolymerisats betrug 0,080 μm.

$T_G$ = +14 °C, MFT = +12 °C.

Beispiel 4

Aus

540 g Methylmethacrylat

360 g 2-Ethylhexylacrylat

70 g Hydroxyethylmethacrylat

30 g Methacrylatsäure

8 g Methacrylamid

10 g Natriumlaurylsulfat

3 g Laurylmercaptan

2 g Ammoniumperoxydisulfat und

470 g Wasser

wurde eine Emulsion hergestellt und zu einer Lösung von 6 g Natriumlaurylsulfat und 1 g Ammoniumperoxydisulfat in 435 g Wasser zudosiert. Die mit Dimethylisopropylhydroxymethylamin auf pH = 8 gebrachte Dispersion hatte einen Feststoffgehalt von 50%.

$T_G$ = +34 °C, MFT = +32 °C.

Beispiel 5

Aus

360 g Methylmethacrylat

320 g Butylacrylat

70 g Hydroxyethylmethacrylat

20 g Methacrylsäure

20 g N-Methylolacrylamid

20 g Methacrylamid

12 g Natriumlaurylethoxylatsulfat (2-5 Mol Ethylenoxid)

18 g Laurylmercaptan und

900 g Wasser

wurde eine Monomeremulsion hergestellt und zu einer Lösung von 12 g Natriumlaurylsulfat in 600 g Wasser zudosiert. Als Initiator wurde parallel zur Monomeremulsion eine Lösung von 2 g Ammoniumperoxydisulfat in 40 g Wasser zugegeben. Nach der Einstellung mit Dimethylaminoethanol auf pH = 8,5 erhielt man eine Dispersion mit einem Feststoffgehalt von 35%. Der mittlere Teilchendurchmesser des Copolymerisats betrug 0,12 μm.

Anwendungsbeispiel 1

Herstellung einer Weisslackfarbe auf der Basis der Dispersion nach Beispiel 5:

A) Pigmentpaste

4,82 g Hexamethoxymethylmelamin (50% in Wasser)

4,82 g Wasser (deionisiert)

1,20 g Natriumnitrit (5% in Wasser)

0,36 g Natriumpolyacrylat (25% in Wasser)

0,19 g Additionsprodukt von 1 Mol Nonylphenol und 6-10 Mol Ethylenoxid

0,07 g handelsüblicher Entschäumer

19,29 g Titandioxid (Rutiltyp)

B) Bindemittel

62 g Dispersion nach Beispiel 5 (35%ig)

7,25 g Wasser

Teil A) wurde zunächst 16 Stunden in einer Kugelmühle gemahlen, dann wurde Teil B) zugemischt und das Gemisch erneut für 16 Stunden in einer Kugelmühle abgerieben.

Der Weisslack hatte eine Auslaufzeit von 30 Sekunden (DIN-Becher, DIN 53 211, 4-mm-Düse) und wurde mit einem Wasser/Butylglykolgemisch (7:3) auf eine Auslaufzeit von 18-20 Sekunden eingestellt. Der spritzfertige Lack hatte ein Bindemittel/Pigment-Verhältnis von 1:0,8 und ein Festkörperverhältnis von Dispersion/Melaminharz von 9:1 bei einem Lösemittelgehalt von weniger als 2%. Lackfilme auf Stahlblech zeigen einen Glanz von 85% (gemessen bei 60°-Winkel nach DIN 67 530). Alle Prüfungen der Haftung bei langsamer und schlagartiger Untergrundverformung sowie nach dem Gitterschnittverfahren führten zu sehr guten Werten.

Anwendungsbeispiel 2

Herstellung eines grauen Spritzfüllers auf der Basis der Polymerisatdispersion nach Beispiel 3:

A) Pigmentpaste

80 g Titandioxid (Rutiltyp)
40 g Talkum
80 g Zinksulfit/Bariumsulfat
60 g Kreide
19 g Kieselgel
10 g Strontiumchromat
1,5 g Flammruss
10 g Bleisilicochromat
8 g Natriumpolyacrylat (25% in Wasser)
4 g Additionsprodukt von 1 Mol Nonylphenol und 6 bis 10 Mol Ethylenoxid
1 g handelsüblicher Entschäumer
10 g Natriumnitrit (10% in Wasser)
20 g Butylglykol
86,5 g Wasser (deionisiert)

B) Bindemittel

540 g Dispersion nach Beispiel 3, 50%ig
30 g Hexamethoxymethylmelamin
Nach dem Verfahren gemäss Anwendungsbeispiel 1 stellte man einen Spritzfüller her, der ein Copolymerisat/Melaminharz-Verhältnis von 9:1 und ein Bindemittel/Pigment-Verhältnis von 1:1 aufwies. Die auf Stahlblech aufgespritzte Füllerfarbe wurde für 20 Minuten bei +150°C eingebrannt. Die Dispersionsfüllerfilme zeigten gute mechanische Eigenschaften und gute Beständigkeitseigenschaften bei der Belastung mit Chemikalien (Lösemittel, Salzlösungen). Die Haftung auf konventionellen Einbrenngrundierungen entsprachen dem Stand der Technik.

Anwendungsbeispiel 3

Herstellung einer Weisslackfarbe für Einschichtlackierungen auf der Basis der Copolymerisat-Dispersion nach Beispiel 3:

A) Pigmentpaste

100 g Titandioxid (Rutiltyp)
40 g Hexamethoxymethylmelamin (50% in Wasser)
3 g Natriumpolyacrylat (25% in Wasser)
1,6 g Additionsprodukt von 1 Mol Nonylphenol und 6-10 Mol Ethylenoxid
0,6 g handelsüblicher Entschäumer
10 g Natriumnitrit (5% in Wasser/Ethanol 1:1)
23 g Butylglykol/Ethyldiglykol (12:11)

B) Bindemittel

360 g Copolymerisat-Dispersion nach Beispiel 3, 50%ig
70 g Wasser/Butylglykol (7:3)
Nach dem Verfahren gemäss Anwendungsbeispiel 1 stellt man eine weisse Lackfarbe her, die bei einer Auslaufzeit von 30 Sekunden (nach DIN 53 211) einen Festkörpergehalt von 49% aufwies und einen Lösemittelgehalt von weniger als 10% hatte. Die eingebrannten Lackfilme zeigten auf Stahlblech hervorragende Haftungs- und Elastizitätseigenschaften:
Erichsentiefung (DIN 53 156): 9,8 mm
Schlagtiefung (ASTM G 14): 92 cm • kg
Gitterschnitt (DIN 53 151): 0
Die Weisslackfilme hatten glatte, fehlerfreie Oberflächen und einen Glanz von 85% (DIN 67 530).

Anwendungsbeispiel 4

Herstellung eines grauen Strukturlackes auf der Basis der Copolymerisat-Dispersion nach Beispiel 3:

A) Pigmentpaste

12 g Titandioxid (Rutiltyp)
1,5 g Talkum
17 g Calciumcarbonat
0,2 g Russ
0,3 g Eisenoxid rot
1,5 g Natriumnitrit (10% in Wasser)
1,2 g Ethylenglykol

B) Bindemittel

61 g Copolymerisat-Dispersion
5,3 g Hexamethoxymethylmelamin (63% in Wasser/Ethylenglykol. 1:1)
Der Strukturlack hatte einen Festkörper von 65% und eine Auslaufzeit von 210 Sekunden (nach DIN 53 211). Das Bindemittel/Pigment-Verhältnis betrug 1:0,9. Zur Ausbildung von optimalen Strukturen wurde der Lack 2-schichtig gespritzt. Der Vorlack wurde mit Wasser auf eine Auslaufzeit von 20 Sekunden (nach DIN 53 211) verdünnt und dann appliziert. Der eigentliche Strukturlack wird nach einer Ablüftzeit unverdünnt aufgespritzt. Die Strukturausbildung mit der Copolymerisat-Dispersion nach Beispiel 3 als Bindemittel war wesentlich besser als mit herkömmlichen Alkydharzbindemitteln.

Anwendungsbeispiel 5

Herstellung eines roten Einschichtlackes auf der Basis der Copolymerisat-Dispersion nach Beispiel 4:

A) Pigmentpaste

38 g Molybdatrot
19 g Permanentrot
3 g Natriumpolyacrylat (25% in Wasser)
15 g Natriumnitrit (10% in Wasser)
65 g Ethylenglykol
3 g Dimethylaminoethanol
105 g Wasser (deionisiert)

B) Bindemittel

684 g Copolymerisat-Dispersion
60 g Hexamethoxymethylmelamin (63% in Wasser/Ethylglykol, 1:1)
8 g handelsübliches Verlaufshilfsmittel auf Silikonbasis (50% in Lösungsmittel)

Nach dem Verfahren gemäss Anwendungsbeispiel 1 stellt man eine rote Lackfarbe her, die ein Polymerisat/Melaminharz-Verhältnis von 9:1 und ein Bindemittel/Pigment-Verhältnis von 1:0,15 aufwies. Bei einem Festkörpergehalt von 44% und einem pH von 8,5 lag die Auslaufzeit der Dispersion bei 1/ Sekunden (DIN 53 211). Der Anteil der organischen Lösemittel betrug 8%. Die bei 130°C (30 min) eingebrannten Lackfilme hatten Glanzweite von 86-88% (DIN 67 530). Die hervorragende Haftung zeigt sich auch durch eine Erichsentiefung von 9,2 mm (DIN 53 156).

Vergleichsbeispiel zum Anwendungsbeispiel 3

Herstellung von Weisslackfarben für Einschichtlackierungen auf der Basis von Copolymerisat-Dispersionen gemäss deutschen Offenlegungsschriften 2 211 169 (Beispiel 2) und 2 709 308 (Beispiel 1, 47 prozentig):

A) Pigmentpaste

64 g Titandioxid (Rutiltyp)
16 g Hexamethoxymethylmelamin (50% in Wasser)
1,2 g Natriumpolyacrylat (25% in Wasser)
0,64 g Additionsprodukt von 1 Mol Nonylphenol und 6-10 Mol Ethylenoxid
0,24 g handelsüblicher Entschäumer
4 g Natriumnitrit (5% in Wasser/Ethanol, 1:1) B) Bindemittel

152 g Copolymerisat-Dispersion
Bei dem Herstellungsverfahren der Weisslacke in einer Kugelmühle erhielt man mit der Dispersion gemäss deutscher Offenlegungsschrift 2 211 169 keine stabilen Lackfarben. Die Pigmentbenetzung war ungenügend, und die Lackfarbe enthielt Pigmentagglomerate. Eine Spritzapplikation war aufgrund der mangelnden Lackhomogenität nicht möglich.

Mit der Dispersion gemäss der deutschen Offenlegungsschrift 2 709 308 erhielt man einen stabilen Weisslack, der aber nach der Spritzapplikation und dem Einbrennen zu stark gestörten Lackoberflächen (Kocher, Blasen, Nadelstiche) führte und mangelhafte Chemikalienresistenz zeigte bei Glanzwerten von 70% (nach DIN 67 530).

**Patentansprüche**

1. Verfahren zur Herstellung einer wässrigen Dispersion von Copolymerisaten, die mit Aminoplasten in der Wärme vernetzbar sind, durch Copolymerisation von Styrol und/oder Methylenmethacrylat als «hartmachende» Komponente, 2-Ethylhexylacrylat und/oder Butylacrylat und/oder Ethylacrylat als «weichmachende» Komponente, Hydroxyethyl(meth)acrylat und/oder Hydroxypropyl(meth)acrylat, Acrylsäure und/oder Methacrylsäure sowie einem Amid und/oder einem N-Methylolamid und/oder einem veretherten N-Methylolamid elner $\alpha,\beta$-ungesättigten Carbonsäure in wässriger Phase in Gegenwart eines Emulgators und eines radikalbildenden Initiators, dadurch gekennzeichnet, dass ein Gemisch aus

I. 40-60 Gew.-% Methylmethacrylat oder Styrol oder eines Gemischs dieser Monomeren,

II. 30-50 Gew.-% Ethylacrylat, Butylacrylat oder 2-Ethylhexylacrylat oder eines Gemischs dieser Monomeren,

III. 6,9-15 Gew.-% Hydroxyethylacrylat, Hydroxyethylmethacrylat, Hydroxypropylacrylat oder Hydroxypropylmetharylat oder eines Gemischs dieser Monomeren,

IV. 1-5 Gew.-% Acrylsäure oder Methacrylsäure oder eines Gemischs dieser Monomeren und

V. 0,5-5 Gew.-% eines Amids oder N-Methylolamids oder eines veretherten N-Methylolamids einer $\alpha,\beta$-ungesättigten Carbonsäure oder eines Gemischs solcher Monomeren copolymerisiert wird.

2. Verwendung der nach dem Verfahren des Anspruchs 1 erhaltenen Copolymerisat-Dispersion für die Herstellung von durch Wärme vernetzbaren Überzügen.

## Claims

1. A process for the preparation of an aqueous dispersion of copolymers, which can be crosslinked with aminoplasts by the action of heat, by copolymerization of styrene and/or methyl methacrylate, as the hardening component, 2-ethylhexyl acrylate and/or butyl acrylate and/or ethyl acrylate as the plasticizer component, hydroxyethyl(meth)acrylate and/or hydroxypropyl(meth)acrylate, acrylic acid and/or methacrylic acid and an amide and/or an N-methylolamide and/or an etherified N-methylolamide of an $\alpha,\beta$-unsaturated carboxylic acid in the aqueous phase in the presence of an emulsifier and a radical-forming initiator, which comprises copolymerizing a mixture of

I. 40-60% by weight of methyl methacrylate or styrene or a mixture of these monomers, II. 30-50% by weight of ethyl acrylate, butyl acrylate or 2-ethylhexyl acrylate or a mixture of these monomers,

III. 6,9-15% by weight of hydroxyethyl acrylate, hydroxyethyl methacrylate, hydroxypropyl acrylate or hydroxypropyl methacrylate or a mixture of these monomers,

IV. 1-5% by weight of acrylic acid or methacrylic acid or a mixture of these monomers and

V. 0.5-5% by weight of an amide or N-methylolamide or an etherified N-methylolamide of an $\alpha,\beta$-unsaturated carboxylic acid or a mixture of monomers of this type.

2. The use of the copolymer dispersion, obtained by the process of claim 1, for the preparation of coatings which can be crosslinked by the action of heat.

## Revendications

1. Procédé pour préparer une dispersion aqueuse de copolymères réticulables à chaud par des aminoplastes, par copolymérisation du styrène et/ou du méthacrylate de méthyle en tant que composant "durcisseur", de l'acrylate d'éthyl-2 hexyle et/ou de l'acrylate de butyle et/ou de l'acrylate d'éthyle en tant que composant "plastifiant", de l'acrylate ou du méthacrylate d'hydroxyéthyle et/ou de l'acrylate ou du méthacrylate d'hydroxypropyle, de l'acide acrylique et/ou de l'acide méthacrylique, et d'un amide et/ou d'un N-méthylol-amide et/ou d'un N-méthylol-amide éthérifié dérivant d'un acide carboxylique insaturé en $\alpha,\beta$,en phase aqueuse, en présence d'un émulsionnant et d'un amorceur générateur de radicaux, procédé caractérisé en ce qu'on copolymérise un mélange constitué :

I. de 40 à 60% en poids de méthacrylate de méthyle ou de styrène ou d'un mélange de ces monomères,

II. de 30 à 50% en poids d'acrylate d'éthyle, d'acrylate de butyle ou d'acrylate d'éthyl-2 hexyle ou d'un mélange de ces monomères,

III. de 6,9 a 15% d'acrylate d'hydroxyéthyle, de méthacrylate d'hydroxyéthyle, d'acrylate d'hydroxypropyle ou de méthacrylate d'hydroxypropyle ou d'un mélange de ces monomères,

IV. de 1 à 5% en poids d'acide acrylique ou d'acide méthacrylique ou d'un mélange de ces monomères et

V. de 0,5 à 5% en poids d'un amide ou d'un N-méthylolamide ou d'un N-méthylolamide éthérifié dérivant d'un acide carboxylique insaturé en $\alpha,\beta$, ou d'un mélange de ces monomères.

2. Application de la dispersion de copolymères qui a été obtenue par le procédé de la revendication 1 à la fabrication de revêtements réticulables par la chaleur.